# NEUE EUROPÄISCHE PATENTSCHRIFT

(11) **EP 1 588 880 B2**
(45) Veröffentlichungstag und Bekanntmachung des Hinweises auf die Entscheidung über den Einspruch: **19.09.2018**
(45) Hinweis auf die Patenterteilung: 20.03.2013
(21) Anmeldenummer: 04025214.0
(22) Anmeldetag: 22.10.2004
(51) Int. Cl.: B60J 7/00

(54) **Rollo für ein Schiebedachsystem**
Roller blind for sliding roof assembly
Store à enrouleur pour système de toit coulissant

(30) Priorität: 08.04.2004 DE 102004017459
(43) Veröffentlichungstag der Anmeldung: 26.10.2005
(73) Patentinhaber: Roof Systems Germany GmbH, 63128 Dietzenbach (DE)
(72) Erfinder: Becher, Thomas, 63110 Rodgau (DE); Böhm, Horst, 60599 Frankfurt/Main (DE); Grimm, Rainer, 60599 Frankfurt/Main (DE); Biewer, Christian, 64839 Altheim (DE)
(74) Vertreter: Prinz & Partner mbB

(56) Entgegenhaltungen:
- DE-A- 1 401 266
- DE-A1- 10 019 644
- DE-A1- 10 216 186
- DE-B3- 10 253 816
- DE-C1- 4 202 342
- DE-C1- 10 140 412
- DE-C1- 10 225 360
- DE-U1- 20 309 690
- GB-A- 1 304 727
- GB-A- 2 307 709
- US-A- 1 882 982
- US-A- 2 874 770
- US-A- 6 047 762
- US-B1- 6 179 373
- US-B1- 6 309 076

## Beschreibung

Die Erfindung betrifft ein Kraftfahrzeugschiebedachsystem-Rollo, das aus einem flexiblen Material besteht und zwei Führungselemente aufweist, die sich entlang den Längsrändern des Rollos erstrecken und dafür vorgesehen sind, in eine Führung für den entsprechenden Längsrand einzugreifen.

Ein solches Rollo kann unterhalb einer Öffnung in einem Fahrzeugdach angebracht sein, um die Öffnung je nach Wunsch der Fahrzeuginsassen mehr oder weniger abzudecken. Wenn die Öffnung freigegeben sein soll, ist das Rollo auf einer Wickelachse aufgewickeit Von dieser kann es abgezogen werden, so dass es die Öffnung abdeckt. Damit das Rollo, wenn es sich unterhalb der Öffnung im Fahrzeugdach befindet, nicht in den Fahrzeuginnenraum hinein durchhängt, sind die Längsränder des Rollos in einer Führung aufgenommen, so dass es quer zur Verschieberichtung gespannt gehalten werden kann. Üblicherweise werden die Längsränder des Rollos abgewinkelt und in Führungsnuten einer Führungsschiene eingeführt (siehe die EP 1 010 559 A1). Auf diese Weise kann die gewünschte Spannung in der Querrichtung aufgebracht werden. Nachteilig dabei ist, dass aufgrund der abgewinkelten Längsränder eine größere Bauhöhe erforderlich ist. Dies verringert die Kopffreiheit im Fahrzeuginnenraum. Außerdem muss der Übergangsbereich von der Wickelachse bis zum Eintritt in die Führungsnuten von einer Verblendung abgedeckt werden, was dazu führt, das die Verblendung breiter wird.

Aus der DE 1 269 782 ist eine Vorrichtung zum Führen der seitlichen Ränder eines Vorhanges im Innern von Gleitschienen mit schmalem Schlitz bekannt.

Die GB 1 416 431 zeigt eine Verdunkelungsblende für ein Flugzeugfenster.

Die US 4,825,921 zeigt ein Insektenschutzrollo, das an Fenstern oder Türen angebracht werden kann.

Die Aufgabe der Erfindung besteht darin, ein Rollo zu schaffen, welches mit geringem Aufwand und geringem Platzbedarf in einer Führung aufgenommen werden kann, so dass es in Querrichtung straff gehalten werden kann.

Zur Lösung dieser Aufgabe sind erfindungsgemäß bei einem Kraftfahrzeugschiebedachsystem-Rollo der eingangs genannten Art die Merkmale des kennzeichnenden Teils des Anspruchs 1 vorgesehen.

Die Erfindung beruht auf der grundsätzlichen Überlegung, das Rollo nicht mehr seitlich abzuwinkeln, um es in eine Führung einzudringen, damit es straff gehalten werden kann, sondern entlang den Längsrändern des Rollos die als flache Streifen ausgeführten Führungselemente aufzubringen, die im wesentlichen gerade, also ohne dass sie abgewinkelt werden müssen, in eine dem entsprechenden Längsrand zugeordnete Führung hineinlaufen können. Die Führungselemente sind in der Führung so aufgenommen, dass die gewünschte Vorspannung in der Querrichtung erhalten werden kann. Die Verwendung eines Führungselements, das im Ausgangszustand eine erste Querschnittsform aufweist, die zur Aufnahme des Führungselementes in der Führung dient, und es in eine zweite Querschnittsform gebracht werden kann, die es ermöglicht, das Rollo aufzuwickeln, ermöglicht es, eine Änderung der Form des Führungselementes dafür zu nutzen, dass das Führungselement einerseits geeignet in der zugeordneten Führung aufgenommen werden kann, jedoch andererseits flach auf eine Wickelachse zusammen mit dem Rollo aufgewickelt werden kann. Besonders geeignet hierfür ist eine gekrümmte Querschnittsform des Führungselementes. Wenn das Führungselement gekrümmt ist, hat es eine vergleichsweise große Höhe, die zur sicheren Verankerung im Inneren der entsprechenden Führung genutzt werden kann. Wenn das Führungselement dagegen flach gedrückt ist, hat es eine vergleichsweise geringe Höhe, die im Wesentlichen der Materialdicke entspricht. In diesem Zustand kann das Führungselement zusammen mit dem Rollo platzsparend aufgewickelt werden.

Gemäß einer weiteren Ausführungsform der Erfindung kann vorgesehen sein, daß das Führungselement als flacher Streifen mit rechteckigem Querschnitt ausgeführt ist. Dieser kann, insbesondere wenn er nur abschnittsweise mit dem Rollo verbunden ist, ebenfalls zur sicheren Verankerung in der Führung verwendet werden.

Vorteilhafte Ausführungsformen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines Fahrzeugdaches mit einem erfindungsgemäßen Rollo;
- Figur 2 eine schematische Seitenansicht eines erfindungsgemäßen Rollos;
- Figur 3 schematisch einen Schnitt entlang der Ebene III-III von Figur 1;
- Figur 4 in vergrößertem Maßstab den Ausschnitt IV von Figur 2; und
- Figur 5 in einer Ansicht entsprechend derjenigen von Figur 3 eine alternative Ausführungsform der Erfindung.

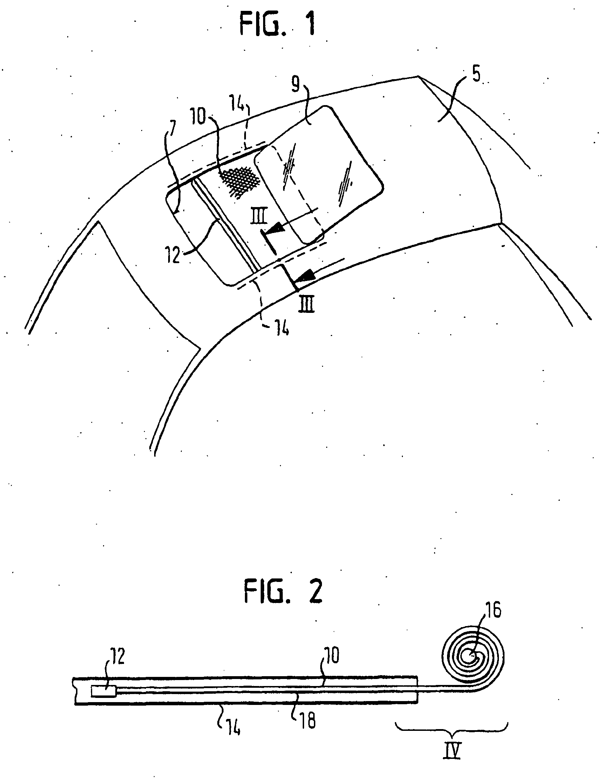

In Figur 1 ist ein Fahrzeugdach 5 zu sehen, welches mit einer Öffnung 7 versehen ist Der Öffnung 7 ist ein Deckel 9 eines Schiebedachsystems zugeordnet. Der Deckel 9 kann zwischen einer geschlossenen Stellung, in welcher er die Öffnung- 7 verschließt, und einer in Figur 1 gezeigten, geöffneten Stellung verstellt werden. Unterhalb des Deckels 9 und auch unterhalb der Öffnung 7 ist ein Rollo 10 angeordnet. Das Rollo 10 kann, bezogen auf das Fahrzeug, nach vorne und hinten verschoben werden. Wenn das Rollo 10 vollständig nach hinten geschoben ist, ist die Öffnung 7 vollständig freigegeben. Frischluft und Sonnenlicht haben dann freien Zugang zum Fahrzeuginnenraum. Wenn das Rollo 10 vollständig nach vorne geschoben ist, ist die Öffnung 7 vom Rollo abgedeckt. Frischluft und Sonnenlicht können somit nur in begrenztem Umfang in den Fahrzeuginnenraum gelangen.

Das Rollo 10 besteht aus einem flexiblen Material, beispielsweise Stoff oder einer Kunststofffolie. An seinem vorderen Rand ist ein Spriegel 12 vorgesehen, an dem ein Fahrzeuginsasse angreifen kann, um das Rollo nach vorne oder hinten zu verschieben. Seitlich entlang der Öffnung 7 erstrecken sich zwei Führungen 14, in denen die beiden Längsränder des Rollos, also in der Fahrzeuglängsrichtung betrachtet der rechte und der linke Rand des Rollos 10, aufgenommen sind. Im Bereich des hinteren Endes der Öffnung 7 befindet sich eine Wikkelachse 16, auf der das Rollo 10 aufgewickelt werden kann. Die Wickelachse 16 ist üblicherweise von einer Feder beaufschlagt, so daß das Rollo 10 automatisch auf der Wickelachse 16 aufgenommen wird, wenn der Spriegel 12 nach hinten verschoben wird.

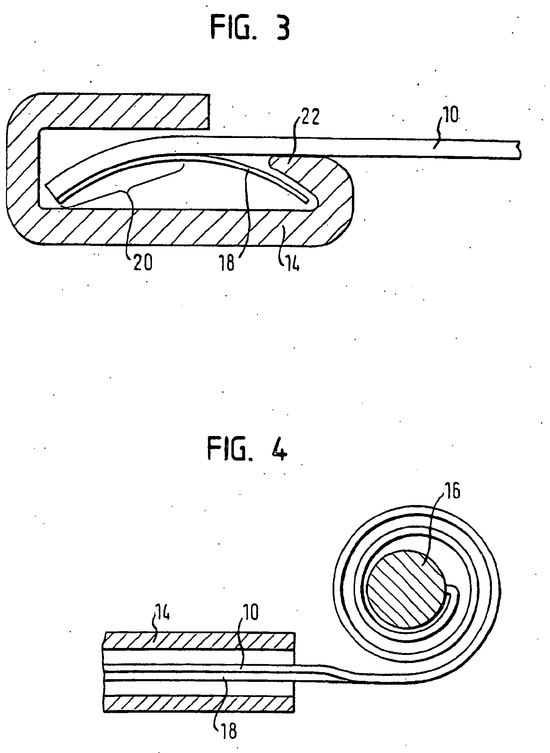

Entlang den Längsrändern des Rollos 10, also in dem den Führungen 14 zugeordneten Bereich, ist jedes Rollo mit einem Führungselement 18 versehen, das bei der Ausführungsform von Figur 3 als dünner Metallstreifen aus Federblech ausgebildet ist. Das Führungselement 18 hat in seinem Ausgangszustand, also wenn keine äußeren Kräfte auf es einwirken, die in Figur 3 sichtbare, gekrümmte Querschnittsform. Das Rollo 10 ist mit dem Führungselement 18 nur auf der äußeren Hälfte des Führungselementes 18 mit diesem verbunden, also vom außenliegenden Rand bis etwa zum Scheitelpunkt des Führungselementes 18. Dieser Bereich ist in Figur 3 mit dem Bezugszeichen 20 bezeichnet. Das Rollo 10 kann mit dem Führungselement 18 insbesondere verklebt sein.

Die Führung 14 hat im Schnitt einen allgemein rechteckigen Querschnitt, in dessen Innenraum das Führungselement 18 zusammen mit dem an ihm angebrachten Randabschnitt des Rollos 10 befestigt ist. Auf der zur Fahrzeugmitte gerichteten Seite weist die Führung einen Schenkel 22 auf, der zwischen das Rollo 10 und den zur Fahrzeugmitte gerichteten Abschnitt des Führungselementes 18 eingreift, also in den Bereich, in welchem das Rollo 10 nicht mit dem Führungselement 18 verklebt ist. Das Führungselement 18 kann sich dadurch unterhalb des Schenkels abstützen, um das Rollo 10 in Querrichtung gespannt zu halten.

Um das Rollo 10 auf der Wickelachse 16 aufzuwickeln, wird das Führungselement 18 aus der in Figur 3 gezeigten ersten Querschnittsform in eine zweite Querschnittsform gebracht. Dies ist in Figur 4 gezeigt (siehe den mit dem Pfeil P bezeichneten Übergangsbereich). Nach Verlassen der Führung 14 und beim Aufwickeln auf die Wickelachse 16 wird das Führungselement 18 flach zusammengedrückt, so daß es einen rechteckigen Querschnitt hat, dessen Höhe der Materialdicke des Führungselementes 18 entspricht. In diesem Zustand kann das Rollo 10 zusammen mit den Führungselementen 18 platzsparend aufgewickelt werden.

Zusätzlich zur Krümmung in Querrichtung kann das Führungselement 18 auch in Längsrichtung gekrümmt sein, so daß es sich selbsttätig aufrollt. Auf diese Weise kann auf die sonst übliche Aufrollfeder an der Wikkelachse 16 verzichtet werden. Gleichzeitig erzielt man eine konstante Zugkraft. Ein weiterer Effekt ist eine Erhöhung der Verschiebekraft, so daß man darüber eine Selbsthemmung erhält. Somit bleibt ein von Hand betätigtes Rollo in jeder Zwischenposition stehen, ohne daß eine zusätzliche Rollobremse notwendig ist.

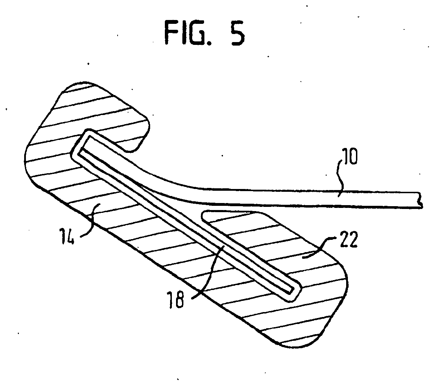

In Figur 5 ist eine alternative Ausführungsform gezeigt. Für die von der ersten Ausführungsform bekannten Bauteile werden dabei die selben Bezugszeichen verwendet, und es wird insoweit auf die obigen Erläuterungen verwiesen.

Der Unterschied zu der in den Figuren 3 und 4 dargestellten Ausführungsform besteht darin, daß das in Figur 5 gezeigte Führungselement 18 von Haus aus einen flachen, rechteckigen Querschnitt hat. Zur Aufnahme in der Führung 14 ist, wie bei der Ausführungsform gemäß den Figuren 3 und 4, das Rollo 10 nur mit einer Hälfte des Führungselementes 18 verbunden, so daß die andere Hälfte hinter dem Schenkel 22 aufgenommen werden kann.

Wenn das Rollo 10 auf der Wickelachse 16 aufgewickelt wird, wird der Randabschnitt des Rollos geringfügig gedreht, so daß sich das Führungselement 18 flach an das Rollo 10 anlegt. In diesem Zustand wird es dann zusammen mit dem Rollo 10 auf der Wickelachse 16 aufgewickelt.

### Bezugszeichenliste

- 5: Fahrzeugdach
- 7: Öffnung
- 9: Deckel
- 10: Rollo
- 12: Spriegel
- 14: Führung
- 16: Wickelachse
- 18: Führungselement
- 20: Verbindungsbereich
- 22: Schenkel

## Patentansprüche

1. Kraftfahrzeugschiebedachsystem-Rollo (10), das aus einem flexiblen Material besteht und zwei Führungselemente (18) aufweist, die sich entlang den Längsrändern des Rollos (10) erstrecken und dafür vorgesehen sind, in eine Führung (14) für den entsprechenden Längsrand einzugreifen, **dadurch gekennzeichnet, dass** das Führungselement (18) ein flacher Streifen aus Federstahl ist, der an dem entsprechenden Längsrand befestigt ist, so dass er zusammen mit dem Rollo (10) aufgewickelt werden kann, dass das Führungselement (18) im Ausgangszustand eine erste Querschnittsform aufweist, die zur Aufnahme des Führungselementes (18) in der Führung (14) dient, und es in eine zweite Querschnittsform gebracht werden kann, die es ermöglicht, das Rollo (10) platzsparend aufzuwickeln, und dass das Führungselement (18), wenn es die erste Querschnittsform hat, im Schnitt betrachtet gekrümmt verläuft, wobei das Rollo (10), in Längsrichtung betrachtet, nur auf der außenliegenden Seite (20) des Führungselementes (18) befestigt ist, wobei das Rollo (10) auf der vom Krümmungsmittelpunkt abgewandten Seite des Führungselementes (18) befestigt ist und wobei das Rollo (10) mit dem Führungselement (18) nur auf der äußeren Hälfte des Führungselements (18) mit diesem verbunden ist.

2. Kraftfahrzeugschiebedachsystem-Rollo nach Anspruch 1, **dadurch gekennzeichnet, dass** das Führungselement (18) einen rechteckigen Querschnitt hat.

3. Kraftfahrzeugschiebedachsystem-Rollo nach einem der vorhergehenden Ansprüche, **dadurch gekennzeichnet, dass** zwei Führungsschienen (14) vorgesehen sind, in denen jeweils ein Längsrand mit dem zugehörigen Führungselement (18) verschiebbar aufgenommen ist.

4. Kraftfahrzeugschiebedachsystem-Rollo nach Anspruch 3, **dadurch gekennzeichnet, dass** die Führungsschiene (14) im Schnitt betrachtet einen Schenkel (22) aufweist, der zwischen das Rollo (10) und das Führungselement (18) greift.

## Claims

1. A motor vehicle sliding roof system roller blind (10) which consists of a flexible material and includes two guide elements (18) which extend along the longitudinal edges of the roller blind (10) and are provided to engage in a guide (14) for the corresponding longitudinal edge, **characterized in that** the guide element (18) is a flat strip made of spring steel which is fastened to the corresponding longitudinal edge, so that it can be wound up together with the roller blind (10), **in that** the guide element (18) in the initial state has a first cross-sectional shape which serves to receive the guide element (18) in the guide (14), and that it can be transferred to a second cross-sectional shape which allows to wind up the roller blind (10) in a space-saving manner, and **in that** the guide element (18), when having the first cross-sectional shape, extends in a curved manner as viewed in section, the roller blind (10), as viewed in the longitudinal direction, being fastened only on the exterior side (20) of the guide element (18), the roller blind (10) being fastened on the side of the guide element (18) facing away from the center of curvature, and the roller blind (10) being connected with the guide element (18) only on the outer half of the guide element (18).

2. The motor vehicle sliding roof system roller blind according to claim 1, **characterized in that** the guide element (18) has a rectangular cross-section.

3. The motor vehicle sliding roof system roller blind according to either of the preceding claims, **characterized in that** two guide rails (14) are provided, in each of which one respective longitudinal edge together with the associated guide element (18) is shiftably received.

4. The motor vehicle sliding roof system roller blind according to claim 3, **characterized in that** the guide rail (14), as viewed in section, has a leg (22) which reaches between the roller blind (10) and the guide element (18).

## Revendications

1. Store (10) de système de toit ouvrant de véhicule automobile, qui est en une matière flexible et présente deux éléments de guidage (18) qui s'étendent le long des bords longitudinaux du store (10) et qui sont destinés à s'engager dans un guide (14) pour le bord longitudinal correspondant, **caractérisé en ce que** l'élément de guidage (18) est une bande plate en acier à ressorts qui est fixée au bord longitudinal correspondant de manière à pouvoir être enroulée ensemble avec le store (10), **en ce que** l'élément de guidage (18) présente, à l'état initial, une première forme de section transversale qui sert à recevoir l'élément de guidage (18) dans le guide (14) et peut être amené dans une deuxième forme de section transversale qui permet l'enroulement du store (10) de façon peu encombrante, et **en ce que** l'élément de guidage (18), lorsqu'il présente la première forme de section transversale, s'étend, vu en coupe, de façon courbe, le store (10), vu en direction longitudinale, étant fixé uniquement du côté extérieur (20) de l'élément de guidage (18), le store (10) étant fixé du côté de l'élément de guidage (18) qui est détourné du centre de courbure, et le store (10) étant relié à l'élément de guidage (18) uniquement sur la moitié extérieure de l'élément de guidage (18).

2. Store de système de toit ouvrant de véhicule automobile selon la revendication 1, **caractérisé en ce que** l'élément de guidage (18) présente une section transversale rectangulaire.

3. Store de système de toit ouvrant de véhicule automobile selon l'une des revendications précédentes, **caractérisé en ce qu'**il est prévu deux rails de guidage (14) dans lesquels un bord longitudinal respectif est reçu de manière déplaçable ensemble avec l'élément de guidage (18) associé.

4. Store de système de toit ouvrant de véhicule automobile selon la revendication 3, **caractérisé en ce que** le rail de guidage (14), vu en coupe, présente une branche (22) qui s'engage entre le store (10) et l'élément de guidage (18).
